# EUROPEAN PATENT APPLICATION

(11) **EP 2 610 141 A1**
(43) Date of publication of application: **03.07.2013**
(21) Application number: 11010260.5
(22) Date of filing: 28.12.2011
(51) Int. Cl.: B62D 5/093

(54) **Hydraulic steering control unit**

(71) Applicant: Sauer-Danfoss ApS, 6430 Nordborg (DK)
(72) Inventor: Arbjerg, Niels, 6470 Sydals (DK)
(74) Representative: Knoblauch, Andreas

(57) **Abstract**

A hydraulic steering control unit (1) is provided comprising a supply port arrangement having a supply port (P) and a return port (T), a working port arrangement having two working ports (L, R), a load sensing port (LS), a main flow path (14) being arranged between said supply port (P) and one of said working ports (L, R) and including a flow meter, a return flow path (16) arranged between the other of said working ports (L, R) and said return port (T), an amplification flow path (17) being arranged parallel to said main flow path (14), and a main load sensing path (19) connecting said load sensing port (LS) with said main flow path (17) and being connected with said return port (T) via first drain orifice means (A1dr).

It is intended to have a flow amplification in a steering unit using dynamic load sensing even in slow steering mode.

To this end a second load sensing path (21) connects said load sensing port (LS) to said amplification flow path (17) downstream said flow meter.

## Description

The present invention relates to a hydraulic steering control unit comprising a supply port arrangement having a supply port and a return port, a working port arrangement having two working ports, a load sensing port, a main flow path being arranged between said supply port and one of said working ports and including a flow meter, a return flow path arranged between the other of said working ports and said return port, an amplification flow path being arranged parallel to said main flow path, a main load sensing path connecting said load sensing port with said main flow path and being connected with said return port via first drain orifice means.

Such a hydraulic steering control unit is known from US 5 819 532.

A hydraulic steering control unit of this kind is used in connection with a source of hydraulic fluid, said source being controlled by load sensing. The source can be a pressure controlled pump or the output of a pressure controlled priority valve. The hydraulic steering control unit uses a dynamic load sensing.

In such a hydraulic steering control unit the load sensing port is permanently supplied with hydraulic fluid under pressure. This hydraulic fluid is available even at the beginning of a steering action avoiding so called hard spots in steering. The steering control unit shows a behaviour similar to an open centre steering control unit.

The amplification flow path is used to guide part of the hydraulic fluid from the supply port to one of the working ports parallel to the main flow path without passing the flow meter. When the capacity of the main flow path and of the amplification flow path are equal there is an amplification of 2:1.

However, in a slow steering mode there is no supply from the supply port to the main flow path or the amplification flow path. Hydraulic fluid is supplied only via the load sensing port. In this case there is no or not a sufficient amplification.

The task underlying the invention is to have a flow amplification in a steering unit using dynamic load sensing even in slow steering mode.

This task is solved in that a second load sensing path connects said load sensing port to said amplification flow path downstream said flow meter.

In this way it is possible to supply hydraulic fluid not only to the main flow path but also to the amplification flow path even if a connection between the supply port and these two flow paths is still closed as it is the case in slow steering mode.

Preferably said amplification load sensing path is connected to said return port via second drain orifice means. In this case, if no steering action is required the hydraulic fluid supplied to the load sensing port can be drained to the return port via the first drain orifice means and the second drain orifice means, which are open in a neutral position of the steering control unit. In this way an unwanted pressure increase in the steering control unit can be avoided. However, as soon as a steering operation begins the flow of hydraulic fluid is amplified not only in a fast steering mode but also in a slow steering mode, since the drain orifice means start to close and throttle the flow from the load sensing port to the return port.

In a preferred embodiment steering preventing means are arranged in said second load sensing path between said amplification flow path and said second orifice means, said steering preventing means preventing a fluid flow through said second load sensing path in a neutral position of said steering control unit. The steering preventing means close or shut off a connection between the load sensing port and the amplification flow path when said steering control unit is in its neutral position so that any unwanted pressure increase at one of the working ports can be avoided.

In a preferred embodiment said steering preventing means comprise a variable orifice. This variable orifice can be opened in a controlled manner in order to allow a controlled flow of hydraulic fluid to the amplification flow path.

Preferably said steering preventing means prevent a fluid flow through said second load sensing path in an emergency steering mode of said steering control unit. In an emergency steering mode there is no or not enough hydraulic pressure at the supply port and at the load sensing port. In this case hydraulic fluid can be pumped to one of the working ports using the flow meter as pump. In this case the steering preventing means are closed so that the hydraulic fluid can flow only to the desired working port.

In a preferred embodiment a variable return orifice is arranged in said return path, said variable return orifice being designed to match to the combination of the first drain orifice means and the second drain orifice means. The hydraulic fluid supplied via the load sensing port has only two possibilities to flow through the steering control unit. The first possibility is used in the neutral position of the steering control unit when no steering should be effected, i.e. when there is no steering pressure at the working ports. In this case the hydraulic fluid supplied via the load sensing port is drained directly to the return port via the first drain orifice means and the second drain orifice means. When the steering control unit is operated, the hydraulic fluid uses a second way to flow through said steering control unit. The hydraulic fluid is at least partly directed to one of the working ports and a corresponding amount of hydraulic fluid is returned to the other of said working ports to reach said variable return orifice. At the same time the first drain orifice means and the second drain orifice means have increased there flow resistance. When the variable return orifice is matched to the combination of the first drain orifice means and the second drain orifice means a balance can be achieved, i.e. the total flow of hydraulic fluid supplied by the load sensing port can be kept constant. However, the variable return orifice is designed so that a back pressure is in a steering motor connected to the two working ports is maintained.

Preferably a variable main orifice is arranged in said main flow path and a variable amplification orifice is arranged in said amplification flow path, a ratio between said main orifice and said amplification orifice being the same as a ratio between said first drain orifice means and said second drain orifice means. The ratio between the variable main orifice and the variable amplification orifice determines the amplification ratio, if for example both variable orifice have the same flow area the amplification is 2:1 since the same flow of hydraulic fluid is created in the main flow path and in the amplification flow path. If the flow resistance of the variable amplification orifice is only half of the flow resistance of the variable main orifice, there is a flow through the amplification flow path being double of the flow through the main flow path so that the amplification in this case is 3:1. The ratio between the variable main orifice and the variable amplification orifice is maintained independently of the actual opening degree of these two orifices which can change during the steering operation. The same ratio is used between the first drain orifice means and the second drain orifice means. This ratio is maintained independently of the actual flow area through these two drain orifice means. When the ratio between the variable main orifice and the variable amplification orifice on the one hand and the two drain orifice means on the other hand is the same, the same amplification can be achieved in the slow steering mode and in the fast steering mode.

In another preferred embodiment the ratio of the opening degrees of the variable main orifice and the variable amplification orifice varies over a steering angle or a steering speed, respectively. This feature can be used to vary the amplification factor over the steering speed or the steering angle. A large steering angle requires usually a correspondingly large steering speed. For example it is possible to have no amplification in a first speed range which can be from 0-20 rpm (or any other range). The flow starts increasing at another pressure value of e.g. 30 rpm. This could be done by "playing" with the two bleed characteristics of the main variable orifice and the variable amplification orifice.

Furthermore it is preferable that the ratio of the opening degrees of the variable main orifice and the variable amplification orifice is asymmetric with respect to the steering direction. In this case different left/ right amplifications appear, i.e. there is one amplification factor to the right and another amplification factor to the left. This could be an advantage for example in the case of an unbalanced cylinder.

Preferably said main orifice and said amplification orifice open at the same time during operation of said steering control unit. In this way the amplification of the flow of hydraulic fluid is kept constant over the total operating area of the steering control unit. This makes steering very convenient for a driver.

In a preferred embodiment said main orifice and said amplification orifice open before said first drain orifice means and said second drain orifice means are fully closed. In this way a smooth transition between the slow steering and the fast steering can be achieved.

Preferably first check valve means are arranged in said main load sensing path and second check valve means are arranged in said amplification load sensing path, said check valve means closing in a direction to said load sensing port. The check valves prevent a back flow out of the main flow path or the amplification flow path, respectively, back to the load sensing port.

Preferably a first fixed orifice is arranged in said main load sensing path and a second fixed orifice is arranged in said amplification load sensing path. These two fix orifices or bleeds can be used to determine the maximum flow of hydraulic fluid through the main load sensing path and the amplification load sensing path respectively.

A preferred example of the invention will now be described in more detail with reference to the drawing, wherein:
- Fig. 1: is a section of a hydraulic steering control unit
- Fig. 2: is a schematic view of a hydraulic circuit of said steering control unit.

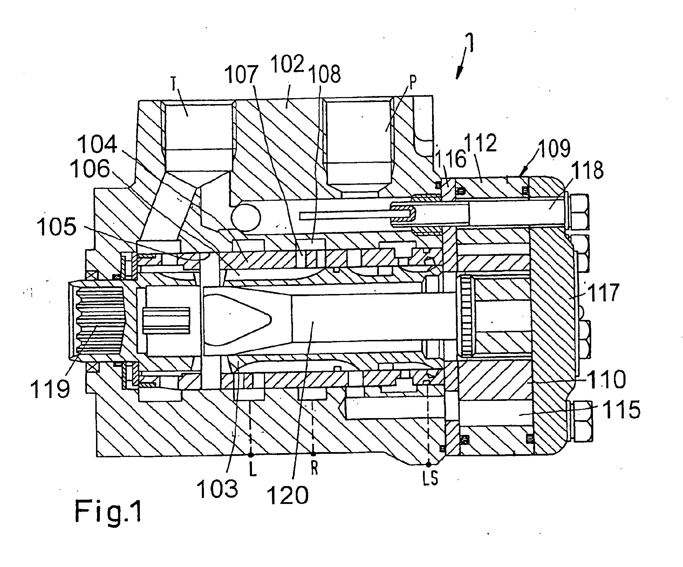

Fig. 1 shows a hydraulic steering device 101 having a housing 102. The housing is provided with a pressure port P, a tank port T, and two working ports L, R.

The steering device 101 comprises a direction valve, said direction valve comprises an inner valve element or spool 103 and an outer valve element or sleeve 104. The sleeve 104 is arranged rotatable in a bore 105 of the housing 101. The spool 103 is positioned rotatable within the sleeve 104. The spool 103 has a plurality of grooves 106 cooperating with bores 107 in the sleeve 104. The bores 107 open into grooves 108 in the wall of the bore 105. The bores 107 and the grooves 106 together form variable orifices as it is known in the art.

The steering device 101 further comprises a gear wheel set 109 used as a fluid meter. As it is known, the gear wheel set 109 comprises a star 110 having a plurality of teeth extending radially outwardly. Furthermore, the gear wheel set 109 comprises a ring 112 having a number of teeth extending radially inwardly. The star 110 has one tooth less than the ring. Therefore, a plurality of chambers 115 is formed between the star 110 and the ring 112. As it is known in the art, the chambers 115 are supplied with hydraulic fluid under pressure in order to expand a chamber 115 or the fluid is released from the chamber 115, when the volume of the chamber decreases.

The star 110 is arranged between a first plate 116 and a second plate 117. Those plates 116, 117 are clamped together by means of bolts 118.

The spool 103 comprises a coupling 119 by which the spool 103 can be coupled to the shaft of a steering wheel or the like. When the steering wheel is turned, the spool 103 is rotated relatively to the sleeve 104 and opens some orifices and closes some other orifices as it is known in the art. Hydraulic fluid under pressure flows from the pressure port P to the gear wheel set 109 driving the star 110 which rotates and orbits within the ring 112. Fluid escaping from the gear wheel set 109 is guided through one of the working ports L, R. The rotational movement of the star 110 is transmitted to the sleeve 104 by means of a dog bone 120 which is in engagement with the star 110 via another coupling. When the star 110 rotates, the sleeve 104 is rotated relatively to the spool 103 in order to bring the spool 103 and the sleeve 104 again in neutral position.

When the pressure at the pressure port P drops and the vehicle equipped with the steering device 101 has still to be steered, the gear wheel set 109 can be used as auxiliary pump. The torque for driving this pump is produced by the driver of the vehicle via the steering wheel.

A hydraulic circuit 1 of said steering control unit 101 comprises the supply port arrangement having the supply port P and the return port T. Furthermore, the circuit 1 comprises the working port arrangement having two working ports L, R. The working ports L, R can be connected to a steering motor 2 shown by way of example. Other types of steering motors are possible.

The supply port P is connected with a source 3 of hydraulic fluid under pressure. In the present case this source comprises a fixed displacement pump 4 and a priority valve 5, the input 6 of which being connected to the pump 4. The priority valve 5 has a first output CF connected to the supply port P of the steering control unit 1 and a second output EF connected to a further hydraulic consumer having a lower priority than the steering control unit 1 as it is known in the art.

The priority valve is of a dynamic load sensing type as it is known in the art. The priority valve 5 comprises a piston 7 controlling the flow of hydraulic fluid from the input 6 to one of the two outputs CF, EF. The piston 7 is on one side loaded by a spring 8. The spring 8 is arranged in a first pressure chamber 9. This pressure chamber 9 is connected to the first output CF of the priority valve via a bleed dyn.

However, a priority valve is not in all cases necessary.

The opposite side of the piston 7 is loaded by a pressure in a second pressure chamber 10. The second pressure chamber 10 is connected to the first output CF of the priority valve 5. The source 3 has a load sensing input which is connected to the first pressure chamber 9 via a fixed bleed 12.

Such source 3 of dynamic load sensing type is known per se so that no further explanation is necessary. However, the source 3 can be replaced by another source of a dynamic load sensing type, like a load sensing controlled pump.

The supply port P of the steering control unit 1 is connected to the first output CF of the priority valve 5. The return port T is connected to a tank 13. The load sensing port LS is connected to the load sensing port 11 of the source 3.

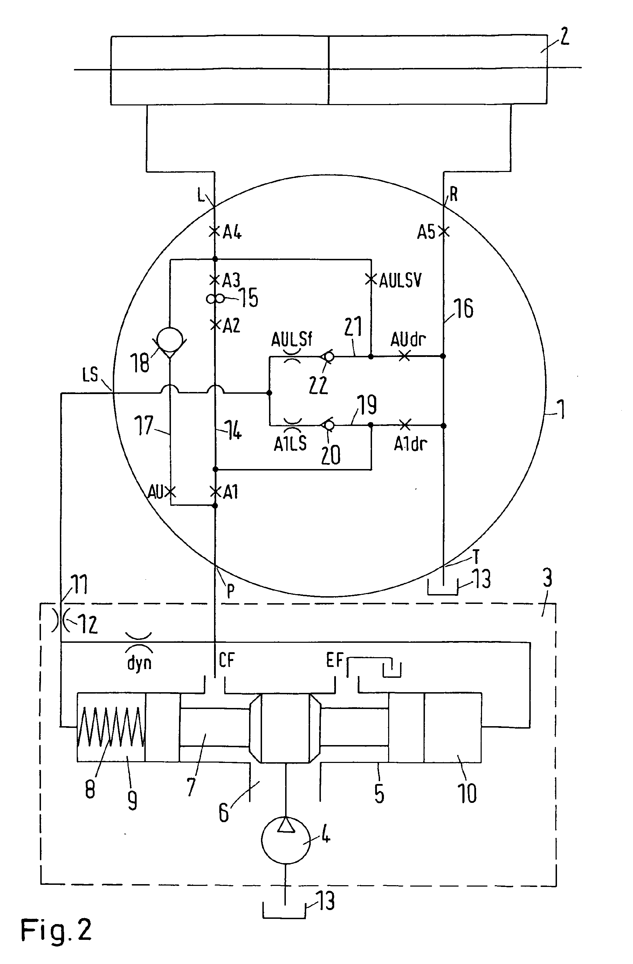

Fig. 2 schematically shows a main flow path 14. The main flow path 14 comprises in series connection a variable main flow orifice A1, the first variable flow meter orifice A2, a flow meter 15, a second variable flow meter orifice A3 and a variable working port orifice A4.

The housing, the spool and the sleeve do not only define the variable orifices A1-A4 but include also direction valve means which are not shown here in order to simplify the explanation. Therefore the main flow path 14 is arranged between the supply port P and one of the working ports L depending on the direction of rotation of the steering wheel. The main flow path 14 can be established between the supply port P and the other working port R as well.

When the main flow path 14 has been established between the supply port P and the left working port L, a return flow path 16 is established between the other working port R and the return port T. A variable working port orifice A5 is arranged in this return flow path 16.

An amplification flow path 17 is arranged parallel to the main flow path 14. The amplification flow path 17 branches of the main flow path 14 upstream the variable main orifice A1 and is connected to the main flow path 14 downstream the second variable flow meter orifice A3. A check valve 18 is arranged in the amplification flow path 17 opening in a direction to the working port L.

The load sensing port LS is connected to the main flow path 14 by means of a main load sensing path 19. A first fixed orifice A1LS is arranged in said main load sensing path 19 as well as a check valve 20 opening in a direction to the main flow path 14. Furthermore the main load sensing path 19 is connected to the return port T via first drain orifice means Aldr.

Furthermore the load sensing port LS is connected to the amplification flow path 17 by means of a second load sensing path 21. A second fixed orifice AULSf is arranged in this second load sensing path 21 as well as a check valve 22 opening in a direction to the amplification flow path 17. The second load sensing path 21 is connected to the return port T via second drain orifice means AUdr.

Steering preventing means AULSV are arranged in the second load sensing path 21 between the check valve 22 and the amplification flow path 17.

The operation of the steering control unit 1 is as follows:

In a neutral position (steering angle equal 0 ± a deadband) the orifices A1, A2, A3, A4, A5 and AULSV are closed. The first drain orifice Aldr and a second drain orifice AUdr are open to allow hydraulic fluid supplied via the load sensing port LS to be drained to the return port T. Therefore some hydraulic fluid under pressure necessary for actuating the steering motor 2 is permanently available in the steering control unit 1 as it is in an open centre steering control unit. This has the additional advantage that the steering control unit 1 can be permanently held on the temperature of the hydraulic fluid.

When a driver of a vehicle in which the steering control unit 1 is build in operates the steering wheel, the valving elements of the steering control unit 1 are moved relative to each other, e.g. the spool and a sleeve are rotated relative to each other. Depending on the angle of rotation the variable orifices behave as follows: The first orifices to open are the variable flow meter orifices A2, A3. The next orifices to open are the working port orifices A4, A5. The last orifices to open are the variable main orifice A1 and the variable amplification orifice AU. The steering preventing means AULSV which is presently also a variable orifice starts to open between the variable flow meter orifices A2, A3 and the variable working port orifices A4, A5.

The first drain orifice means Aldr and the second drain orifice means AUdr start closing when the spool and the sleeve are rotated relative to each other. However, they are fully closed only at an angle at which the variable main orifice A1 and the variable amplification orifice AU just have started to open.

When the steering angle is large, the two drain orifice means A1dr, AUdr are closed so that hydraulic fluid can not escape from the load sensing port LS directly to the return port T. Hydraulic fluid is supplied from the supply port P to one of the working ports L through the main flow path 14 and through the amplification flow path 17. The fluid in the main flow path 14 is metered. The metering in the flow meter 15 provoke that the spool and the sleeve are returned back to their neutral position. When the variable main orifice A1 closes, the variable amplification orifice AU closes as well. Therefore the flow of fluid through the amplification flow path 17 is controlled in the same way as the flow of fluid through the main flow path 14.

The volume flow is determined by the flow resistance of the amplification flow path 17. When this flow resistance is the same as that of the main flow path 14, the same flow is established through the main flow path 14 and through the amplification flow path 17 so that an amplification of 2:1 can be achieved. When the flow resistance of the amplification flow path 17 is only half of the flow resistance of the main flow path 14, the flow of hydraulic fluid through the amplification flow path 17 will be double of that through the main flow path 14 so that an amplification of 3:1 can be achieved.

In another embodiment the ratio of the opening degrees of the variable main orifice A1 and the variable amplification orifice AU varies over a steering angle or a steering speed, respectively. In this case the amplification can be made variable. It is possible to have no amplification in a certain range around the neutral position, for example from 0 to 20 rotations per minute (rpm). Amplification starts only from 30 rpm on. Other values are possible. This can be done by "playing" with the two bleed characteristics of the variable main orifice A1 and the variable amplification orifice AU.

Furthermore, the ratio of the opening degrees of the variable main orifice A1 and the variable amplification orifice AU can be made asymmetric so that an asymmetric amplification could be imagined. In this case there are different amplification factors for the left side and the right side. This is an advantage for example in the case of an unbalanced cylinder.

When the steering angle is small, the variable main orifice A1 and the variable amplification orifice AU are not opened. Nevertheless the steering motor 2 should be actuated. To this end the first drain orifice means Aldr and the second drain orifice means AUdr are throttled. The ratio between the first drain orifice means Aldr and the second drain orifice means AUdr is the same as the ratio between the flow resistance between the main flow path 14 and the amplification flow path 17, i.e. when the volume flow through the main flow path 14 is the same as through the amplification flow path 17, the volume flow through the main load sensing path 19 is the same as through the amplification load sensing path 21. When the amplification flow path 17 allows the double of the flow through the main flow path 14 the amplification load sensing path 21 allows the double of the flow through the main load sensing path 19.

The two drain orifice means A1dr, AUdr have the same throttling characteristic, i.e. at each angle of rotation between spool and sleeve the first drain orifice means Aldr allows the same percentage of the flow through the main load sensing path 19 to part as the second drain orifice means AUdr does.

As mentioned above, when the steering angle is only small, the variable main orifice A1 and the variable amplification orifice AU are still closed. However, the two drain orifice means A1dr, AUdr start throttling the flow of hydraulic fluid to the return port T so that the remaining flow of hydraulic fluid enters the main flow path 14 and the amplification flow path 17, respectively, to arrive at the working port L in order to actuate the steering motor 2. Hydraulic fluid coming back from the steering motor 2 enters the steering control unit 1 at the other working port R and returns back to the tank 13 via the tank port T.

There are only two ways for the hydraulic fluid entering the steering control unit 1 at the load sensing port LS: The first way is via the main load sensing path 19 and the first drain orifice means Aldr and the amplification load sensing path 21 and the second drain orifice means AUdr directly to the tank port T. The other way is (when the two drain orifice means A1dr, AUdr are partly or fully closed) through the main flow path 14 or the second flow path 17, respectively, to the working port L and back through the working port R. It is advantageous to match the variable working port orifice A5 to the two drain orifice means A1dr, AUdr so that the variable working port orifice A5 can take over the volume flow of hydraulic fluid which is throttled by the two drain orifice means A1dr, AUdr. However, the variable working port orifice A5 is dimensioned so that a certain back pressure can be achieved in the steering motor 2.

Such a steering control unit can be used in a reaction system and as well in a non-reaction system. In a reaction system the driver feels at the steering wheel the effect of forces acting on the steered wheels. When the steered wheels are loaded by such forces the steering wheel is rotated. In a non-reaction system the driver can not feel at the steering wheel the effect of external forces acting on the steered wheels.

## Claims

1. A hydraulic steering control unit (1) comprising a supply port arrangement having a supply port (P) and a return port (T),
a working port arrangement having two working ports (L, R),
a load sensing port (LS),
a main flow path (14) being arranged between said supply port (P) and one of said working ports (L, R) and including a flow meter (15),
a return path (16) arranged between the other of said working ports (R, L) and said return port (T), an amplification flow path (17) being arranged parallel to said main flow path (14),
and a main load sensing path (19) connecting said load sensing port (LS) to said main flow path (14) and being connected to said return port (T) via first drain orifice means (Aldr),
**characterized in that** a second load sensing path (21) connects said load sensing port (LS) to said amplification flow path (17) downstream said flow meter (15).

2. The steering control unit according to claim 1, **characterized in that** said second load sensing path (21) is connected to said return port (T) via second drain orifice means(AUdr).

3. The steering control unit (1) according to claim 1 or 2 , **characterized in that** steering preventing means (AULSV) are arranged in said second load sensing path (21) between said amplification flow path (17) and said second orifice means (AUdr), said steering preventing means (AULSV) preventing a fluid flow through said second load sensing path (21) in a neutral position of said steering control unit (1).

4. The steering control unit (1) according to claim 3, **characterized in that** said steering preventing means(AULSV) comprise a variable orifice (A1-A4).

5. The steering control unit(1) according to claim 4, **characterized in that** said steering preventing means (AULSV) prevent a fluid flow through said second load sensing path (21) in an emergency steering mode of said steering control unit (1).

6. The steering control unit (1) according to any of claims 1 to 5, **characterized in that** a variable return orifice (A5) is arranged in said return flow path (16), said variable return orifice (A5) being designed to match the combination of the first drain orifice means (A1dr) and the second drain orifice means (AUdr).

7. The steering control unit (1) according to any of claims 1 to 6, **characterized in that** a variable main orifice (A1) is arranged in said main flow path (14) and a variable amplification orifice (AU) is arranged in said amplification flow path, a ratio between said main orifice (A1) and said amplification orifice (AU) being the same as a ratio between said first drain orifice means (A1dr) and said second drain orifice means (AUdr).

8. The steering control unit according to any of claims 1 to 6, **characterized in that** the ratio of the opening degrees of said variable main orifice (A1) and said variable amplification orifice (AU) varies over a steering angle or a steering speed, respectively.

9. The hydraulic steering device according to any of claims 1 to 8, **characterized in that** the ratio of the opening degrees of said variable main orifice (A1) and said variable amplification orifice (AU) is asymmetric with respect to the steering direction.

10. The steering control unit (1) according to any of-claims 7 to 9, **characterized in that** said main orifice (A1) and said amplification orifice (AU) open at the same time during operation of said steering control unit (1).

11. The steering control unit (1) according to any of claims 7 to 10, **characterized in that** said main orifice (A1) and said amplification orifice (AU) open before said first drain orifice means (A1dr) and said second drain orifice means (AUdr) are fully closed.

12. The steering control unit (1) according to any of claims 1 to 11, **characterized in that** first check valve means (18) are arranged in said main load sensing path (19) and second check valve means (20) are arranged in said second load sensing path (21), said check valve means (19, 21) closing in a direction to said load sensing port (LS).

13. The steering control unit (1) according to any of claims 1 to 9, **characterized in that** a first fixed orifice (A1LS) is arranged in said main load sensing path (19) and a second fixed orifice (AULSf) is arranged in said second load sensing path (21).

## Amended claims

### Amended claims in accordance with Rule 137(2) EPC.

**1.** A hydraulic steering control unit (1) comprising
a supply port arrangement having a supply port (P) and a return port (T),
a working port arrangement having two working ports (L, R),
a load sensing port (LS),
a main flow path (14) being arranged between said supply port (P) and one of said working ports (L, R) and including a flow meter (15), a return path (16) arranged between the other of said working ports (R, L) and said return port (T),
an amplification flow path (17) being arranged parallel to said main flow path (14),
and a main load sensing path (19) connecting said load sensing port (LS) to said main flow path (14) and being connected to said return port (T) via first drain orifice means (A1dr),
**characterized in that** a second load sensing path (21) connects said load sensing port (LS) to said amplification flow path (17) downstream said flow meter (15).

**2.** The steering control unit according to claim 1, **characterized in that** said second load sensing path (21) is connected to said return port (T) via second drain orifice means(AUdr).

**3.** The steering control unit (1) according to claim 1 or 2, **characterized in that** steering preventing means (AULSV) are arranged in said second load sensing path (21) between said amplification flow path (17) and said second orifice means (AUdr), said steering preventing means (AULSV) preventing a fluid flow through said second load sensing path (21) in a neutral position of said steering control unit (1).

**4.** The steering control unit (1) according to claim 3, **characterized in that** said steering preventing means(AULSV) comprise a variable orifice (A1-A4).

**5.** The steering control unit (1) according to claim 4, **characterized in that** said steering preventing means (AULSV) prevent a fluid flow through said second load sensing path (21) in an emergency steering mode of said steering control unit (1).

**6.** The steering control unit (1) according to any of claims 1 to 5, **characterized in that** a variable return orifice (A5) is arranged in said return flow path (16), said variable return orifice (A5) being designed to match the combination of the first drain orifice means (A1dr) and the second drain orifice means (AUdr).

**7.** The steering control unit (1) according to any of claims 1 to 6, **characterized in that** a variable main orifice (A1) is arranged in said main flow path (14) and a variable amplification orifice (AU) is arranged in said amplification flow path, a ratio between said main orifice (A1) and said amplification orifice (AU) being the same as a ratio between said first drain orifice means (A1dr) and said second drain orifice means (AUdr).

**8.** The steering control unit according to any of claims 1 to 6, **characterized in that** the ratio of the opening degrees of said variable main orifice (A1) and said variable amplification orifice (AU) varies over a steering angle or a steering speed, respectively.

**9.** The hydraulic steering device according to any of claims 1 to 8, **characterized in that** the ratio of the opening degrees of said variable main orifice (A1) and said variable amplification orifice (AU) is asymmetric with respect to the steering direction.

**10.** The steering control unit (1) according to any ofclaims 7 to 9, **characterized in that** said main orifice (A1) and said amplification orifice (AU) open at the same time during operation of said steering control unit (1).

**11.** The steering control unit (1) according to any of claims 7 to 10, **characterized in that** said main orifice (A1) and said amplification orifice (AU) open before said first drain orifice means (A1dr) and said second drain orifice means (AUdr) are fully closed.

**12.** The steering control unit (1) according to any of claims 1 to 11, **characterized in that** first check valve means (20) are arranged in said main load sensing path (19) and second check valve means (22) are arranged in said second load sensing path (21), said check valve means (20, 22) closing in a direction to said load sensing port (LS).

**13.** The steering control unit (1) according to any of claims 1 to 9, **characterized in that** a first fixed orifice (A1 LS) is arranged in said main load sensing path (19) and a second fixed orifice (AULSf) is arranged in said second load sensing path (21).
